(19) Europäisches Patentamt / European Patent Office / Office européen des brevets

(11) **EP 4 417 412 A1**

(12) **EUROPEAN PATENT APPLICATION**
published in accordance with Art. 153(4) EPC

(43) Date of publication:
**21.08.2024 Bulletin 2024/34**

(21) Application number: **22881030.5**

(22) Date of filing: **12.10.2022**

(51) International Patent Classification (IPC):
**B32B 5/26** (2006.01)   **B32B 27/12** (2006.01)
**D04B 1/00** (2006.01)   **D06M 17/00** (2006.01)

(52) Cooperative Patent Classification (CPC):
**B32B 5/26; B32B 27/12; D04B 1/00; D06M 17/00**

(86) International application number:
**PCT/JP2022/037972**

(87) International publication number:
**WO 2023/063335 (20.04.2023 Gazette 2023/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.10.2021 JP 2021169188**

(71) Applicant: **Mitsukawa Kabushiki Kaisha
Echizen-shi, Fukui 915-0026 (JP)**

(72) Inventor: **YAMADA, Masato
Echizen-shi Fukui 915-0242 (JP)**

(74) Representative: **Plasseraud IP
104 Rue de Richelieu
CS92104
75080 Paris Cedex 02 (FR)**

(54) **LAMINATE CLOTH AND SINGLE CIRCULAR KNITTED FABRIC**

(57) Provided is a single circular knitted fabric that can constitute a laminate cloth having dramatically improved durability against hooking and wear, by adopting a special knitted fabric structure for a laminate cloth having at least a base layer and a single circular knitted fabric layer. A two-layered laminate cloth (10) is composed of a base layer (12) formed from either one or both of a resin film and a nonwoven fabric, and a single circular knitted fabric layer (14) with a jersey knit texture. Here, the single circular knitted fabric forming the single circular knitted fabric layer (14) of the two-layered laminate cloth (10) has a unique knitted structure. That is, the Vh value (C/W) representing the ratio between the density in the warp direction (number of courses C) of the jersey knit texture and the density in the weft direction (number of wells W) of the jersey knit texture is within the range of 1.5 or more and 3.0 or less.

FIG 1

(a)

**(Cont. next page)**

FIG 1

(b)

10

14

12

**Description**

TECHNICAL FIELD

The present invention relates to a single circular knitted fabric constituting a laminate cloth used for clothing that requires windproofing, waterproofing, and moisture permeability, such as rain gear and sportswear.

BACKGROUND ART

For clothing that requires windproofing, waterproofing, and moisture permeability, such as rain gear, mounting climbing wear, sportswear, workwear, uniforms, and combat uniforms, moisture-permeable and waterproof cloths obtained by laminating a resin film or a nonwoven fabric on one surface of a woven fabric, a knitted fabric, a nonwoven fabric, or the like by coating or lamination, have been developed. These moisture-permeable and waterproof cloths have a three-layered structure in which a lining is laminated on a surface of the woven fabric, knitted fabric, or the like on the opposite side from the laminated resin film. As a result, peeling, damage, soiling, oil stains, stickiness, and the like in the moisture-permeable and waterproof cloths are suppressed.

The lining of such a moisture-permeable and waterproof cloth is required to neither increase the thickness and the basis weight of the three-layered laminate nor impair the feel of touch when worn. Thus, a moisture-permeable and waterproof cloth that uses a tricot knitted fabric having a recessed and projected structure in the knit texture on the surface as a lining has been developed (Patent Document 1). However, the above-mentioned clothing such as rain gear and mounting climbing wear often use hook-and-loop fasteners (for example, "NEWECO MAGIC (registered trademark)" manufactured by Kuraray Fastening Co., Ltd., and the like). When a tricot knitted fabric is used on the back side, there is a problem in that the hook side of such a hook-and-loop fastener, a button, and the like are likely to get caught in the recessed and projected structure of the tricot knitted fabric and are likely to be deteriorated due to wear.

Thus, in order to solve such a problem, as shown in the previous patent application, the applicant of the invention developed a moisture-permeable and waterproof three-layered laminate cloth that exhibits high friction durability compared to a tricot lining and that is lightweight and has an excellent feel of touch, by using a circular knitted fabric having a high stitch density as the lining (Patent Document 2).

In addition, as shown in the previous patent applications, the present applicant developed a two-layered laminate cloth that is lightweight, has high elastic properties, also has high anti-snag properties and excellent friction durability against hook-and-loop fasteners, and has moisture-permeability and waterproof properties, by laminating a single circular knitted fabric having a high stitch density with a resin film (Patent Document 3).

These two-layered and three-layered laminate cloths have significantly improved wear resistance compared to the cloth lined with a tricot knitted fabric as described in Patent Document 1, and have excellent durability as laminate cloths using circular knitted fabrics.

CITATION LIST

PATENT DOCUMENT

Patent Document 1: JP 55-007483 A
Patent Document 2: JP 4805408 B
Patent Document 3: JP 5602040 B

SUMMARY OF THE INVENTION

PROBLEM TO BE SOLVED BY THE INVENTION

However, it is the current circumstances that even these laminate cloths according to Patent Document 2 and Patent Document 3 are not sufficient for use applications that require further friction durability, such as uniforms and combat uniforms for example. In this regard, when the fiber fineness and density are increased in an attempt to further increase durability, there is a problem in that the basis weight as well as thickness of the single circular knitted fabric also increase, and the laminate cloth as a whole also becomes thicker and heavier. Under these circumstances, there has been a demand to realize a laminate cloth having higher durability while maintaining excellent feel of touch and lightness.

The invention was achieved in view of such problems, and it is an object of the invention to provide a laminate cloth having dramatically improved durability against hooking and wear, by using a single circular knitted fabric having a special knitted structure. It is another object of the invention to provide a single circular knitted fabric for configuring such a laminate cloth.

MEANS FOR SOLVING PROBLEM

In order to achieve the above-described objects, a laminate cloth according to the invention is a laminate cloth including:

at least a base layer formed from either one or both of a resin film and a nonwoven fabric; and
a single circular knitted fabric layer with a jersey knit texture,
in which a Vh value (C/W) representing a ratio between a density in a warp direction (number of courses C) of the jersey knit texture and a density in a weft direction (number of wells W) of the jersey knit texture, is within the range of 1.5 or more and 3.0 or less.

With regard to the laminate cloth, it is preferable that at least one kind of fabric selected from a woven fabric, a knitted fabric, and a nonwoven fabric is laminated on the opposite side of the single circular knitted fabric with respect to the base layer.
With regard to the laminate cloth, it is preferable that the number of courses C is 90 courses or more per inch.
With regard to the laminate cloth, it is preferable that a knitting yarn constituting the single circular knitted fabric is a filament raw silk (straight yarn).
With regard to the laminate cloth, it is preferable that a fiber fineness of the knitting yarn of the single circular knitted fabric has a fiber fineness of 36 decitex or less.
With regard to the laminate cloth, it is preferable that the number of courses C is 100 courses or more per inch.
With regard to the laminate cloth, it is preferable that the number of courses C is 110 courses or more per inch.
It is preferable that the laminate cloth is laminated by using a sinker loop surface of the single circular knitted fabric as a joining surface with the base layer.
With regard to a laminate cloth obtained by laminating a sinker loop surface of the single circular knitted fabric as a joining surface with the base layer, it is preferable that a length in a warp direction of the knitting yarn appearing on a knit stitch (needle loop surface) side of the jersey knit texture is 150 $\mu$m or less.
In addition, in order to achieve the above-described objects, a single circular knitted fabric according to the invention is used for any of the above-mentioned laminate cloths.

EFFECT OF THE INVENTION

In the laminate cloth according to the invention, the single circular knitted fabric used in the laminate is composed of a jersey knit texture created by a special knitted structure. As a result, a laminate cloth in which durability against hooking and wear is dramatically improved, which can cope with use applications that require higher friction durability on the front surface and/or back surface, such as uniforms and combat uniforms, and which is lightweight and has a favorable feel of touch, can be obtained.

BRIEF DESCRIPTION OF DRAWINGS

Fig. 1(a) is a perspective view schematically illustrating a two-layered laminate cloth according to the present embodiment, and Fig. 1(b) is a vertical cross-sectional view schematically illustrating the I-I cross-section in Fig. 1(a);
Fig. 2(a) is a perspective view schematically illustrating a three-layered laminate cloth according to the present embodiment, and Fig. 2(b) is a vertical cross-sectional view schematically illustrating the II-II cross-section in Fig. 2(a);
Fig. 3 is a schematic view illustrating a single circular knitted fabric with a general jersey knit texture as viewed from the knit stitch side surface (needle loop surface);
Fig. 4 is a schematic view illustrating a single circular knitted fabric with an increased stitch density as viewed from the knit stitch side surface (needle loop surface);
Fig. 5 is a schematic view illustrating the knit stitch side surface (needle loop surface) of the single circular knitted fabric according to the present embodiment;
Fig. 6 is a schematic view illustrating the purl stitch side surface (sinker loop surface) of the single circular knitted fabric according to the present embodiment; and
Fig. 7 is a schematic view for describing a method for calculating the length in the warp direction of the knitting yarn appearing on the needle loop surface side of the single circular knitted fabric according to the present embodiment.

MODE(S) FOR CARRYING OUT THE INVENTION

Hereinafter, embodiments for carrying out the laminate cloth according to the invention (in the present specification, simply referred to briefly as "present embodiment") will be described in detail with reference to the drawings.

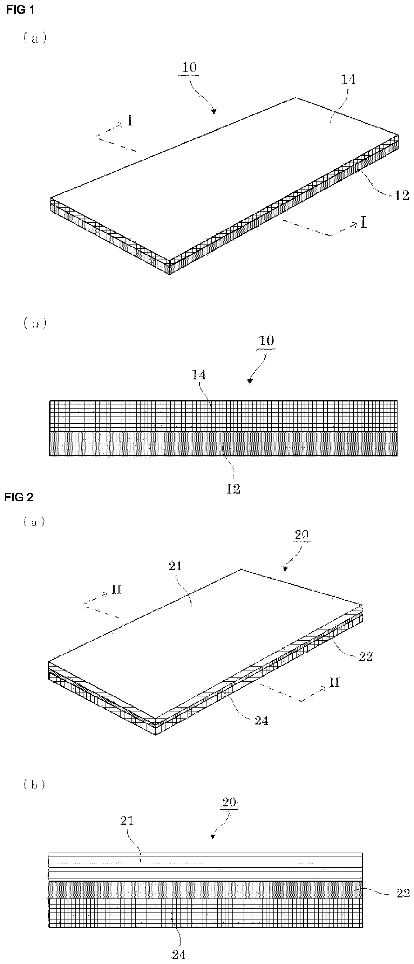

Fig. 1(a) is a perspective view schematically illustrating a two-layered laminate cloth as the laminate cloth according to the present embodiment, and Fig. 1(b) is a vertical cross-sectional view schematically illustrating the I-I cross-section in Fig. 1(a). As shown in Figs. 1(a) and 1(b), the two-layered laminate cloth 10 according to the present embodiment is composed of a base layer 12 formed from either one or both of a resin film and a nonwoven fabric, and a single circular knitted fabric layer 14 with a jersey knit texture.

The single circular knitted fabric is a circular knitted fabric (weft knitted fabric) knitted by a circular knitting machine with a single row needle bed, and the single circular knitted fabric according to the present embodiment has the most basic jersey knit texture (plain knitted fabric) among others. The stitch density of the single circular knitted fabric is expressed by the number of rows (courses) of consecutive knitted stitches in the warp direction and the number of rows (wells) of consecutive knitted stitches in the weft direction. The number of courses formed in 1 inch (= 2.54 cm) in the warp direction of a single circular knitted fabric is referred to as the number of courses. Furthermore, the number of wells formed in 1 inch in the weft direction of a single circular knitted fabric is referred to as the number of wells. In the present specification, hereinafter, the numbers will be simply referred to as "number of courses" and "number of wells" and will be represented by variables "C" and "W", respectively.

The two-layered laminate cloth 10 according to the present embodiment is such that the single circular knitted fabric forming a single circular knitted fabric layer 14 of the laminate has a unique knitted structure. That is, the single circular knitted fabric layer 14 is formed from a single circular knitted fabric with a jersey knit texture and is such that the Vh value (C/W), which represents the ratio of the number of courses C representing the density in the warp direction of the jersey knit texture to the number of wells W representing the density in the weft direction of the jersey knit texture, is within the range of 1.5 or greater and 3.0 or less.

In addition, Fig. 2(a) is a perspective view schematically illustrating a three-layered laminate cloth as the laminate cloth according to the present embodiment, and Fig. 2(b) is a vertical cross-sectional view schematically illustrating the II-II cross-section in Fig. 2(a). As shown in Figs. 2(a) and 2(b), the three-layered laminate cloth 20 according to the present embodiment is composed of: a front surface layer 21 formed from at least one kind of fabric selected from a woven fabric, a knitted fabric, and a nonwoven fabric; an intermediate layer 22 formed from either one or both of a resin film and a nonwoven fabric; and a back surface layer 24 formed from a single circular knitted fabric with a jersey knit texture.

According to the present embodiment, a three-layered laminate cloth in which a layer formed from a single circular knitted fabric is used as the back surface layer 24 will be described as a representative example; however, a layer formed from a single circular knitted fabric can also be used as the front surface layer. Even in this case, a three-layered laminate cloth having dramatically improved durability against hooking and wear as compared to three-layered laminate cloths obtained by conventional technologies, can be obtained.

In the three-layered laminate cloth 20 according to the present embodiment as well, the single circular knitted fabric constituting the back surface layer 24 of the laminate has a unique knitted structure. That is, the back surface layer 24 is formed from a single circular knitted fabric with a jersey knit texture and is such that the Vh value (C/W), which represents the ratio of the number of courses C representing the density in the warp direction of the jersey knit texture to the number of wells W representing the density in the weft direction of the jersey knit texture, is within the range of 1.5 or greater and 3.0 or less.

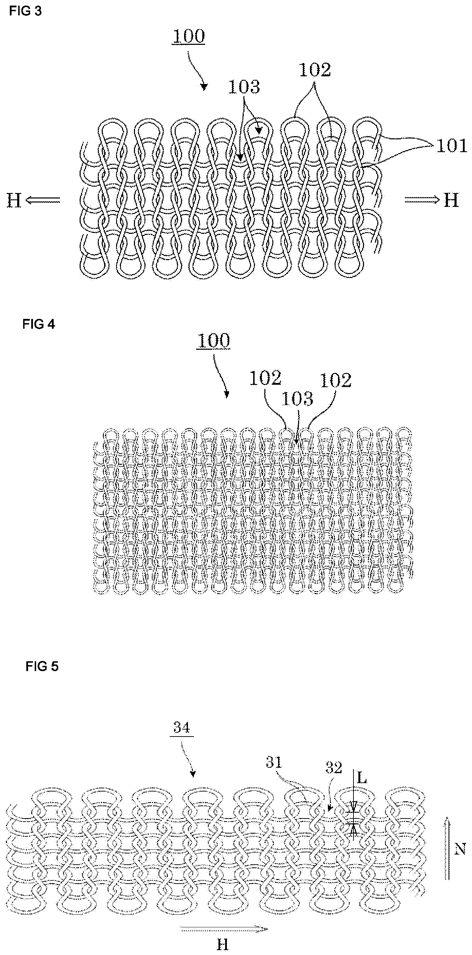

Fig. 3 is a schematic view illustrating a single circular knitted fabric with a general jersey knit texture as viewed from the knit stitch side surface (needle loop surface). As shown in Fig. 3, a single circular knitted fabric 100 with a general jersey knit texture is formed by continuing knitted stitches 102 using a knitting yarn 101 extending in the weft direction (width direction) H. Due to such a knitted structure, the single circular knitted fabric 100 is thin and lightweight and has a characteristic of being easily stretched in the weft direction (width direction) H. While a light and soft feel of touch is obtained due to this characteristic, on the other hand, hook-and-loop fasteners and the like are likely to get caught in the knitting yarns 101 between the gaps 103 of the knitted stitches 102.

In contrast, as shown in Fig. 4, when the knitted stitches 102 are made smaller to increase the stitch density, the gaps 103 become narrow, and hooking is less likely to occur. However, there occurs a problem in that the basis weight of the single circular knitted fabric 100 becomes heavy, and since circular knitting is knitted using needles, there is a limit to how high the density can be increased depending on the thickness of the needle, which makes it impossible to achieve a density at which hooking is dramatically difficult to occur.

Thus, the inventors repeatedly conducted research without being bound by the conventional idea that when the number of knitted stitches in a circular knitted fabric is increased, the gaps 103 are narrowed as shown in Fig. 4, making hooking less likely to occur, and as a result, the inventors found that by setting the ratio of the number of courses C/number of wells W to 1.5 or more, hooking can be made less likely to occur, without increasing the number of knitted stitches. That is, when the number of wells W is reduced relative to the number of courses C, the proportion of the length of the knitting yarn used in the weft direction is increased. As a result, the length of the knitting yarn appearing in the warp direction is reduced, and therefore, the length of the knitting yarn appearing in the warp direction on the surface of the single circular knitted fabric is also shortened. It has been found that this allows the durability against hooking to be dramatically increased, even without increasing the basis weight of the single circular knitted fabric.

Fig. 5 is a schematic view illustrating the knit stitch side surface (needle loop surface) of the single circular knitted fabric 34 according to the present embodiment based on such findings. Since the ratio (Vh value) of the number of courses C/number of wells W of the single circular knitted fabric 34 is 1.5 or more, as shown in Fig. 5, the interval in the warp direction N of the knitted stitches 32 of the knitting yarn 31 forming the courses is narrowed. As a result, the length L of the knitting yarn 31 appearing in the warp direction N of the knit stitch side surface (needle loop surface) is shortened. That is, since the portion where the knitting yarn 31 is floating on the surface of the single circular knitted fabric 34 becomes smaller, hooking on the knitting yarn 31 is less likely to occur. Therefore, even when the interval in the weft direction H of the knitted stitches 32 becomes wider, the friction durability can be significantly improved, and the basis weight does not increase.

From the viewpoint of increasing such an effect of shortening the length L while widening the interval in the weft direction H of the knitted stitches 32, the Vh value is more preferably 1.6 or more, and even more preferably 1.7 or more.

Furthermore, it is preferable that the number of courses C is 90 courses/inch or more. By increasing the number of courses C, the interval in the warp direction N of the knitted stitches 32 of the knitting yarn 31 forming the courses is narrowed as described above, the portion where the knitting yarn 31 is floating becomes smaller, and hooking is less likely to occur. The number of courses C is more preferably 100 courses/inch or more, and even more preferably 110 courses/inch or more.

On the other hand, since it is easy to reduce the weight by decreasing the number of wells W, the number of wells W is preferably 70 wells/inch or less, and more preferably 65 wells/inch or less. Furthermore, from the viewpoint of the ease of production, it is preferable that the number of wells W is 37 wells/inch or more.

In addition, when the single circular knitted fabric 34 is finished up with a Vh value of 1.5 or more, the knitting yarn 31 is stretched in an overall straight line shape, and the strength of the single circular knitted fabric 34 as a simple fabric is improved. It is conceived that such an increase in the strength of the single circular knitted fabric 34 also contributes to improvement in the friction durability against hooking.

Therefore, unlike the three-layered laminate cloth of Patent Document 2, the three-layered laminate cloth 20 according to the present embodiment does not have an essential requirement of using the purl stitch side surface (sinker loop surface) of the single circular knitted fabric 34 as a joining surface with an intermediate layer 22 (resin film). That is, even in a case where the knit stitch side surface (needle loop surface) of the single circular knitted fabric 34 is used as a joining surface with the intermediate layer 22, the durability against hooking and friction can be improved to a large extent than in conventional cases.

However, in a case where further durability against hooking and friction is required, it is preferable that the single circular knitted fabric 34 is laminated such that the sinker loop surface of the single circular knitted fabric 34 is joined with the intermediate layer 22, and the needle loop surface of the single circular knitted fabric 34 is seen at the front surface.

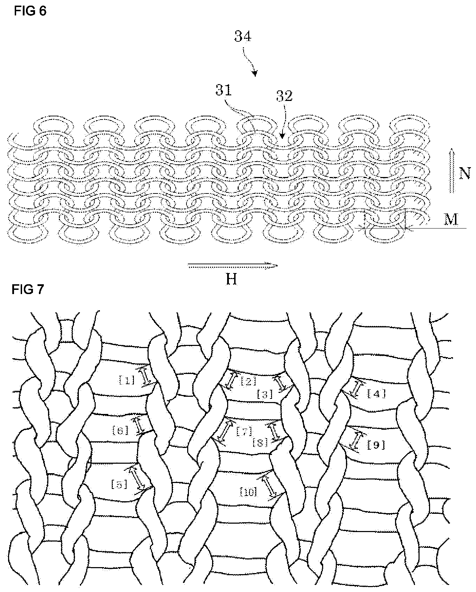

In a case where the needle loop surface of the single circular knitted fabric 34 is used as a joining surface with the intermediate layer 22, the front surface of the back surface layer 24 becomes the sinker loop surface of the single circular knitted fabric 34, and as shown in the schematic diagram of Fig. 6, the knitting yarn 31 is in a state of floating only for the length M. In contrast, in a case where the sinker loop surface of the single circular knitted fabric 34 is used as a joining surface with the intermediate layer 22, the front surface of the back surface layer 24 becomes the needle loop surface of the single circular knitted fabric 34 shown in Fig. 5, and the knitting yarn 31 is in a state of floating only for the length L. Since the length L is shorter than the length M, the durability against hooking and friction is improved.

Regarding the fiber constituting the knitting yarn 31 of the single circular knitted fabric 34, both natural fibers and artificial fibers can be used. Examples of the natural fibers include cotton cloth, linen, wool, and silk. Examples of the artificial fibers include synthetic fibers, regenerated fibers (rayon, Cupro, and the like), semi-synthetic fibers (acetate, Promix, and the like), and inorganic fibers (fluorine fibers, glass fiber, stainless steel fibers, and the like). The fiber constituting the knitting yarn 31 of the single circular knitted fabric 34 according to the present embodiment is preferably a synthetic fiber from the viewpoints of durability, general-purpose usability, and cost.

The synthetic fiber to be used as a material of the knitting yarn 31 is not particularly limited; however, examples thereof include polyester-based fibers consisting of aromatic polyester resins such as polyethylene terephthalate, and aliphatic polyester resins such as polylactic acid; polyamide-based fibers such as nylon 6, nylon 6,6, and Bio-Nylon; polyolefin-based fibers such as polypropylene and polyethylene; acrylic fibers; polyvinyl alcohol-based fibers; and polyvinyl chloride-based fibers.

Among these synthetic fibers, from the viewpoints of general-purpose usability, durability, and the like, polyester-based fibers such as polyethylene terephthalate; polyamide-based fibers such as nylon 6; and polypropylene-based fibers are preferred. Particularly, from the viewpoints of strength, durability, processability, and cost, polyamide-based fibers and polyester-based fibers are preferred. In addition, from the viewpoint of reducing environmental impact, it is also preferable to use recycled fibers made by reusing PET bottles, film scraps, and the like; fibers formed from plant-derived raw materials, including Bio-Nylon and Bio-Polyester; and spun-dyed fibers that are colored by kneading pigments and the like in the state of yarn, in order to prevent generation of wastewater from dyeing.

It is preferable that the fiber fineness of the knitting yarn 31 constituting the single circular knitted fabric 34 is 36 decitex or less. When the knitting yarn 31 becomes to have a fiber fineness of more than 36 decitex, the single circular knitted fabric 34 becomes thick with a heavy basis weight, and the three-layered laminate cloth 20 as a whole also becomes heavy and thick. The fiber fineness is more preferably 3 decitex or more and 33 decitex or less, and even more preferably 4 decitex or more and 22 decitex or less.

The fiber constituting the knitting yarn 31 may be a long fiber (filament) or may be a short fiber (staple); however, the knitting yarn 31 is preferably a filament yarn formed from a long fiber. The knitting yarn 31 may be a monofilament yarn of a single fiber or may be a multifilament yarn composed of a plurality of single fibers; however, the knitting yarn 31 is more preferably a multifilament yarn.

The single fiber fineness in a case where the knitting yarn 31 is a multifilament yarn is preferably in the range of 0.4 decitex or more and 10 decitex or less. The single fiber fineness of the knitting yarn 31 is more preferably in the range of 0.8 decitex or more and 6 decitex or less, and even more preferably in the range of 1.6 decitex or more and 4 decitex or less. When the single fiber fineness is 10 decitex or less, a three-layered laminate cloth 20 having a softer feel of touch on the back surface layer 24 can be obtained. On the other hand, when the single fiber fineness is less than 0.4 decitex, the yarn is too thin, and the durability against hooking and wear is decreased.

As the multifilament yarn of a synthetic fiber, a straight yarn that has not been subjected to high-order processing such as crimping or bulking (hereinafter, also referred to as "raw silk"), a false-twisted crimped yarn or an air-mixed bulky yarn that has been subjected to high-order yarn processing such as crimping or bulking, a twisted yarn, or the like can be used. Particularly, in order to make the back surface layer 24 less likely to catch hook-and-loop fasteners and the like and make a smooth surface, it is preferable to use a yarn whose single fiber is less likely to be unraveled and which has favorable bundling properties. Above all, it is preferable to use a straight yarn, and the physical properties against hooking and wear, as well as the ease of wearing and the ease of movement when produced into clothing, can be further improved. A straight yarn also includes a yarn that is entangled to a slight degree of entanglement imparted by a jet of compressed air in order to allow the yarn to have bundling properties in the filature stage.

The single circular knitted fabric 34 according to the present embodiment is produced into a manufactured product by selecting a single circular knitting machine, setting the knitting conditions, knitting, and performing dyeing and finishing processing in the same manner as in the case of conventional circular knitted fabrics. In order to obtain a single circular knitted fabric 34 having the number of courses, the number of wells, and the ratio thereof within predetermined numerical value ranges and having desired characteristics, the processing conditions particularly for the knitting step and the processing step are important.

It is preferable to knit the single circular knitted fabric 34 using a single circular knitting machine of 46 gauge or higher, and it is more preferable to knit the single circular knitted fabric 34 using a single circular knitting machine of 58 gauge or higher.

A single circular knitted fabric 34 knitted in this way is further subjected to dyeing and finishing processing and becomes a cloth product for lining. As the dyeing and finishing processing, the single circular knitted fabric 34 can be processed by a conventionally known circular knitting dyeing method.

However, with regard to the single circular knitted fabric 34 according to the present embodiment, the ratio of the number of courses C to the number of wells W, that is, the Vh value, at the time point of becoming a laminate cloth needs to be within the range of 1.5 or more and 3.0 or less. In this way, the single circular knitted fabric 34 according to the present embodiment is created.

Next, a method for producing a laminate cloth using a single circular knitted fabric 34 created in this way will be described. Regarding the laminate cloth, in addition to the above-mentioned two-layered laminate cloth 10 and three-layered laminate cloth 20, there is also multilayer laminate cloth; however, here, a method for producing a three-layered laminate cloth 20 as an example of the laminate cloth according to the present embodiment will be described.

A front surface layer 21 in the three-layered laminate cloth 20 according to the present embodiment is formed from at least one fabric selected from a woven fabric, a knitted fabric, and a nonwoven fabric. That is, the front surface layer 21 may be formed from only one kind of fabric selected from a woven fabric, a knitted fabric, and a nonwoven fabric, or may be formed by combining two or more kinds of fabrics among those. As the method for combining two or more kinds of fabrics, a method of laminating fabrics using an adhesive, or a method of joining two or more kinds of fabrics in a planar direction, can be used.

The knit texture of the fabric forming the front surface layer 21 is not particularly limited; however, in the case of a woven fabric, knit textures such as plain weave, twill weave, sateen weave (satin), basket weave, crepe weave, weft backed weave, warp backed weave, hollow weave, and velvet can be adopted. In the case of a knitted fabric, as weft knitting, knit textures such as plain stitch (jersey stitch), dappled stitch, pile stitch, rib stitch (rubber stitch), purl stitch (links stitch), and interlock stitch can be adopted. Furthermore, as warp knitting, knit textures such as single Denbigh stitch, single cord stitch, half tricot stitch, double Denbigh stitch, satin tricot stitch, and queen's cord stitch can be adopted. As the nonwoven fabric, a short fiber nonwoven fabric, a long fiber nonwoven fabric, a dry nonwoven fabric, a wet nonwoven fabric, and the like can be used.

Similarly to the material forming the single circular knitted fabric of the back surface layer 24, the material constituting the fabric used for the front surface layer 21 can be selected from natural fibers such as cotton, linen, and silk; and synthetic fibers such as polyester-based fibers, polyamide-based fibers, polyurethane-based fibers, and acrylic fibers, according to the use application for which the three-layered laminate cloth 20 is used. The fabric used for the front surface layer 21 may be subjected to water-repellent treatment processing, antistatic treatment processing, and the like, which are conventionally known, as necessary.

Similarly, the texture of the fabric used for the front surface layer 21 can also be selected according to the use application for which the three-layered laminate cloth 20 is used. For example, in a case where the three-layered laminate cloth 20 according to the present embodiment is used for mountain climbing in which strength, durability, and lightness are considered important, it is preferable to use a woven fabric woven with a polyester fiber, a polyamide fiber, or the like as the fabric. In addition, in a case where the three-layered laminate cloth 20 is used for sportswear in which stretchability and lightness are considered important, it is preferable to use a knitted fabric knitted from a polyester fiber, a polyamide fiber, or the like as the fabric.

As the resin film or nonwoven fabric used for the intermediate layer 22 of the three-layered laminate cloth 20 according to the present embodiment, various resin films and nonwoven fabrics that are conventionally known can be employed according to the use application of the three-layered laminate cloth 20. Examples of the material of the resin film include a polyurethane resin, an acrylic resin, a polyvinyl chloride resin, a polyester resin, a polyethylene resin, a polypropylene resin, a fluorine-containing resin, a polyamide resin, and a polyimide resin, and the material may be appropriately selected according to the intended use application.

For example, in a case where the three-layered laminate cloth 20 is used for moisture-permeable and waterproof clothing, it is preferable to use a moisture-permeable and waterproof film formed of a polyurethane resin, a polyester resin, a fluorine-containing resin, or the like as the resin film forming the intermediate layer 22. Here, the moisture-permeable and waterproof film can be divided into a porous resin thin film produced by a wet production method and a hydrophilic non-porous resin thin film produced by a dry production method, and they can be used properly based on the characteristics of each of the thin films.

Examples of the nonwoven fabric to be used for the intermediate layer 22 include short fiber nonwoven fabrics, long fiber nonwoven fabrics, nonwoven fabrics obtained by a flash spinning method, nonwoven fabrics obtained by a melt-blowing method, and nonwoven fabrics obtained by an electrospinning method, which are formed of polyester, polypropylene, polyethylene, polyvinyl alcohol, polyamide, acrylonitrile, acetate, cellulose, polyurethane, and the like, and these can be used as appropriate. Furthermore, laminates of a plurality of those can also be used.

The thickness of the intermediate layer 22 is preferably within the range of 1 $\mu$m or more and 300 $\mu$m or less, and more preferably within the range of 5 $\mu$m or more and 100 $\mu$m or less.

The resin film or nonwoven fabric of the intermediate layer 22 according to the present embodiment is laminated on the front surface layer 21 selected from a woven fabric, a knitted fabric, or a nonwoven fabric and the back surface layer 24 formed from the single circular knitted fabric 34, by using a conventionally known method. Specifically, for example, a general lamination method such as a method of directly coating the front surface layer 21 or the back surface layer 24 with a resin material forming the intermediate layer 22, or a method of producing a coating film from a resin material to obtain a resin film and adhering the resin film to the front surface layer 21 and the back surface layer 24 with an adhesive or the like (lamination method), can be applied.

The method of directly coating is a method of applying a resin material on the surface of the front surface layer 21 or the back surface layer 24 into a uniform thin film form to produce a coating film. Regarding the method of applying the resin material, knife-over-roll coating, direct roll coating, reverse roll coating, gravure coating, and the like, which are conventionally known, can be used. When these coating methods are used, the thickness of the applied resin material is adjusted so as to obtain a thickness in the above-mentioned range.

The lamination method is a method of laminating a resin film produced by forming a resin material in advance into a coating film, or a nonwoven fabric produced by the above-mentioned various methods, on the front surface layer 21 and the back surface layer 24 by applying an adhesive on the surface of the resin film or the nonwoven fabric, or a method of laminating an intermediate layer 22 by applying an adhesive on the front surface layer 21 and the back surface layer 24. In the step of producing the intermediate layer 22, the thickness of the formed resin film or nonwoven fabric is adjusted to be in the above-mentioned range. Examples of the method of applying an adhesive include knife-over-roll coating, direct roll coating, reverse roll coating, and gravure coating, which are conventionally known.

Regarding the adhesive, conventionally known adhesives such as adhesives formed of thermoplastic resins, thermosetting adhesives using a resin that is cured by heating or ultraviolet irradiation, and ultraviolet-curable adhesives, can be used. Examples of the resin that is used for the adhesive include a polyester resin, a polyamide resin, a polyurethane resin, a silicone resin, an acrylic resin, a polyvinyl chloride resin, and a polyolefin resin. Particularly, in a case where the three-layered laminate cloth 20 according to the present embodiment is used for moisture-permeable and waterproof clothing, it is preferable to use a highly moisture-permeable adhesive.

The coverage of the adhesive is not particularly limited; however, as the coverage is higher, the peel strength becomes higher. When a highly moisture-permeable adhesive is used, there is no problem even with full-surface adhesion with a coverage of 100%; however, generally, it is preferable to have a coverage of 20% or higher and 80% or lower in order to achieve both moisture-permeability and water resistance. In the case of adopting full-surface adhesion with a coverage of 100%, a knife coater or the like can be used, and in the case of controlling the coverage to be 20% or higher and 80% or lower, a gravure coater or the like can be used. A gravure coater is an apparatus that uses a roll having dot-shaped recessed parts on the surface and transfers an adhesive filled in the recessed parts onto an adhesive surface of a resin film or the like, and the coverage of the adhesive can be freely set by adjusting the area and depth of the recessed parts, and the intervals between the recessed parts.

With regard to the three-layered laminate cloth 20 according to the present embodiment, it is preferable that the overall basis weight is within the range of 30 g/m$^2$ or more and 180 g/m$^2$ or less, and more preferably within the range of 50 g/m$^2$ or more and 150 g/m$^2$ or less. In a case where the basis weight is more than 180 g/m$^2$, when the three-layered laminate cloth 20 is made into clothing, the clothing is heavy and feels uncomfortable, and therefore, it is not preferable. On the other hand, in a case where the basis weight is less than 30 g/m$^2$, the three-layered laminate cloth 20 is too light and has weaker tear strength or the like, and when the laminate cloth 20 is made into clothing, the clothing is likely to be damaged, which is not preferable.

As described above, the method for producing the three-layered laminate cloth 20 as an example of the laminate cloth according to the present embodiment has been described; however, for the two-layered laminate cloth 10 as well, a similar production method except for the portion related to the front surface layer 21 can be used. With regard to the method for producing the two-layered laminate cloth 10, the back surface layer 24 in the method for producing the above-mentioned three-layered laminate cloth 20 corresponds to the single circular knitted fabric layer 14, and the intermediate layer 22 corresponds to the base layer 12.

EXAMPLES

Next, the invention will be described in more detail by way of Examples; however, the invention is not intended to be limited by these Examples.

Based on the production method described in the above-described present embodiment, three-layered laminate cloths according to Examples 1 to 6 and a two-layered laminate cloth according to Example 7 were produced, and the physical properties thereof were measured to evaluate the characteristics. In addition, for a comparison with Examples, four types of three-layered laminate cloths were created as Comparative Examples, and the physical properties were similarly measured to evaluate the characteristics. Each of the physical properties of Examples and Comparative Examples was measured by the following methods.

[1] Number of courses (C)

The number of knitted stitches per inch in the warp direction was counted. The number of knitted stitches was counted at five different sites, and the average value thereof was designated as the number of courses.

[2] Number of wells (W)

The number of knitted stitches per inch in the weft direction was counted. The number of knitted stitches was counted at five different sites, and the average value thereof was designated as the number of wells.

[3] Vh value (C/W) representing ratio of number of courses to number of wells

The number of courses and the number of wells calculated by the above-described methods were used to calculate the Vh value by the following equation.

$$\text{Vh value} = C \div W$$

[4] Length in warp direction of knitting yarn emerging on knit stitch side

The knit stitch side surface (needle loop surface) of the single circular knitted fabric was observed using an optical microscope at a magnification of 200 times to read out the length in the warp direction of the knitting yarn appearing on the knit stitch side. The lengths at 10 sites were read at three different locations on the needle loop surface, and the average value thereof was designated as the length in the warp direction of the knitting yarn. Here, the length in the warp direction of the knitting yarn appearing on the knit stitch side was obtained by measuring the length of the portion where there was no overlapping of the yarn, as shown in the schematic diagram of Fig. 7.

In the example of the schematic diagram of Fig. 7, the read lengths of the portions where there was no overlapping of the yarns of the knitting yarn appearing on the knit stitch side at the 10 sites from [1] to [10] were [1] 0.08 mm, [2] 0.08 mm, [3] 0.07 mm, [4] 0.08 mm, [5] 0.13 mm, [6] 0.07 mm, [7] 0.11 mm, [8] 0.07 mm, [9] 0.09 mm, and [10] 0.11 mm, respectively. Therefore, the average value of the lengths at the 10 sites shown in Fig. 7 was 0.089 mm (89 $\mu$m). Actually, at three locations on the needle loop surface, the lengths at 10 sites were read in this way, and the average value of the lengths at a total of 30 sites was calculated.

[5] Snag characteristics (Friction durability against hook-and-loop fastener)

Friction durability was measured according to ASTM D4966 "Standard Test Method for Abrasion Resistance of Textile Fabrics (Martindale Abrasion Test Method)". The hook side of a hook-and-loop fastener was pressed against the surface of the single circular knitted fabric of a test specimen cut out from each of the two-layered laminate cloth and the three-layered laminate cloth of Examples and Comparative Examples, the test specimen was rotated a predetermined number of times, and the state of occurrence of snags at the friction sites on the test specimen surface after the test, and the like were observed by visual inspection. As the hook-and-loop fastener, "A8693Y" manufactured by Kuraray Fastening Co., Ltd. was used, and the pressing load was set to 9 kPa. The surface state of the friction site of the test specimen after the test was observed by comparing with each standard sample from grade 5 to grade 1, and the test specimen was ranked on the grade of a corresponding standard sample. Incidentally, in a case where the test specimen after the test had a through-hole and was in a state of being unmeasurable, the test specimen was evaluated as the lowest grade 0.

[6] Comprehensive evaluation

The characteristics of the two-layered laminate cloths and the three-layered laminate cloths were comprehensively evaluated by taking the above-described physical property values, particularly friction durability, as well as the feel of touch as a fabric derived from the basis weight and the fiber fineness of the knitting yarn, and the like into consideration. The evaluation criteria were as follows.

[○] The test specimen has extremely excellent characteristics as a two-layered laminate cloth or a three-layered laminate cloth.

[x] No difference is seen between the test specimen and a conventional two-layered laminate cloth or three-layered laminate cloth.

[Example 1]

A three-layered laminate cloth according to Example 1 was produced by knitting a single circular knitted fabric for a back surface layer with a 58-gauge circular knitting machine by using a nylon multifilament raw silk (straight yarn) having a total fiber fineness of 22 decitex, 7 filaments, and a single fiber fineness of 3.1 decitex (22 dtex/7f) as the knitting yarn, and performing dyeing and finishing processing. The obtained single circular knitted fabric had a number of wells of 54 and a number of courses of 111, and the Vh value, which is the ratio of the number of courses/the number of wells, was 2.1. The length of the knitting yarn appearing on the knit stitch side of the single circular knitted fabric was 90 $\mu$m.

On the other hand, as a front surface layer of the three-layered laminate cloth, a woven fabric was prepared by subjecting a woven fabric with a double-lip weave formed of a nylon multifilament false-twisted yarn with 22 decitex for both the warp and the weft and 20 filaments, to a water-repellent treatment with a fluorine-based water-repellent. Furthermore, a porous resin film (thickness 35 $\mu$m) made of a polyurethane-based resin was prepared as an intermediate layer.

The woven fabric for the front surface layer was stuck to one surface of this porous resin film, and the single circular knitted fabric for the back surface layer was stuck to the other surface such that the sinker loop surface side was adhered, to obtain a three-layered laminate cloth (102 g/m$^2$) according to Example 1. The physical property values, the evaluation results, and the like measured for this three-layered laminate cloth are presented in Table 1 and Table 2.

[Example 2]

A single circular knitted fabric for a back surface layer of a three-layered laminate cloth according to Example 2 was produced in the same manner as in Example 1. That is, the single circular knitted fabric was knitted with a 58-gauge circular knitting machine by using a nylon multifilament raw silk having a total fiber fineness of 22 decitex, 7 filaments, and a single fiber fineness of 3.1 decitex (22 dtex/7f) as the knitting yarn, and performing dyeing and finishing processing. The obtained single circular knitted fabric had a number of wells of 53 and a number of courses of 113, and the Vh value, which is the ratio of the number of courses/the number of wells, was 2.1.

Furthermore, as the front surface layer and the intermediate layer, the same materials as those used in Example 1 were used; however, in Example 2, the single circular knitted fabric for the back surface layer was stuck to the resin film surface such that the needle loop surface was adhered, and a three-layered laminate cloth (102 g/m$^2$) according to Example 2 was produced. That is, the three-layered laminate cloth according to Example 2 was such that the adhesive surface of the single circular knitted fabric was the reverse of Example 1. Therefore, while the surface of the lining was the needle loop surface in the three-layered laminate cloth according to Example 1, while in the three-layered laminate cloth according to Example 2, the surface of the lining was the sinker loop surface. The physical property values, the evaluation results, and the like measured for this three-layered laminate cloth are presented in Table 1 and Table 2.

[Example 3]

With regard to a three-layered laminate cloth according to Example 3, a single circular knitted fabric for a back surface layer was produced by knitting the fabric with a 58-gauge circular knitting machine by using a nylon multifilament raw silk having a total fiber fineness of 8 decitex, 5 filaments, and a single fiber fineness of 1.6 decitex (8 dtex/5f) as the knitting yarn, and performing dyeing and finishing processing. The obtained single circular knitted fabric had a number of wells of 56 and a number of courses of 121, and the Vh value, which is the ratio of the number of courses/the number of wells, was 2.2. The length of the knitting yarn appearing on the knit stitch side of the single circular knitted fabric was 122 μm.

On the other hand, as a front surface layer of the three-layered laminate cloth, a woven fabric was prepared by subjecting a plain weave fabric formed of a nylon multifilament false-twisted yarn with 56 decitex for both the warp and the weft and 24 filaments, to a water-repellent treatment with a fluorine-based water-repellent. Furthermore, a hydrophilic non-porous resin film (thickness 14 μm) made of a polyurethane-based resin was prepared as an intermediate layer.

The woven fabric for the front surface layer was stuck to one surface of this hydrophilic non-porous resin film, and the single circular knitted fabric for the back surface layer was stuck to the other surface such that the sinker loop surface side was adhered, to obtain a three-layered laminate cloth (104 g/m$^2$) according to Example 3. The physical property values, the evaluation results, and the like measured for this three-layered laminate cloth are presented in Table 1 and Table 2.

[Example 4]

With regard to a three-layered laminate cloth according to Example 4, a single circular knitted fabric for a back surface layer was produced by knitting the fabric with a 58-gauge circular knitting machine by using a nylon multifilament raw silk having a total fiber fineness of 22 decitex, 24 filaments, and a single fiber fineness of 0.9 decitex (22 dtex/24f) as the knitting yarn, and performing dyeing and finishing processing. The obtained single circular knitted fabric had a number of wells of 54 and a number of courses of 95, and the Vh value, which is the ratio of the number of courses/the number of wells, was 1.8. The length of the knitting yarn appearing on the knit stitch side of the single circular knitted fabric was 129 μm.

Furthermore, as the front surface layer and the intermediate layer, the same materials as those used in Example 1 were used, and the single circular knitted fabric for the back surface layer was stuck to the resin film surface such that the sinker loop surface was adhered, to produce a three-layered laminate cloth (101 g/m$^2$) according to Example 4. The physical property values, the evaluation results, and the like measured for this three-layered laminate cloth are presented in Table 1 and Table 2.

[Example 5]

With regard to a three-layered laminate cloth according to Example 5, a single circular knitted fabric for a back surface layer was produced by knitting the fabric with a 58-gauge circular knitting machine by using a nylon multifilament raw silk having a total fiber fineness of 17 decitex, 7 filaments, and a single fiber fineness of 2.4 decitex (17 dtex/7f) as the knitting yarn, and performing dyeing and finishing processing. The obtained single circular knitted fabric had a number of wells of 47 and a number of courses of 130, and the Vh value, which is the ratio of the number of courses/the number of wells, was 2.8. The length of the knitting yarn appearing on the knit stitch side of the single circular knitted fabric was 58 $\mu$m.

Furthermore, as the front surface layer and the intermediate layer, the same materials as those used in Example 3 were used, and the single circular knitted fabric for the back surface layer was stuck to the resin film surface such that the sinker loop surface was adhered, to produce a three-layered laminate cloth (113 g/m$^2$) according to Example 5. The physical property values, the evaluation results, and the like measured for this three-layered laminate cloth are presented in Table 1 and Table 2.

[Example 6]

With regard to a three-layered laminate cloth according to Example 6, a single circular knitted fabric for a back surface layer was produced by knitting the fabric with a 58-gauge circular knitting machine by using a polyester multifilament raw silk having a total fiber fineness of 33 decitex, 36 filaments, and a single fiber fineness of 0.9 decitex (33 dtex/36f) as the knitting yarn, and performing dyeing and finishing processing. The obtained single circular knitted fabric had a number of wells of 54 and a number of courses of 102, and the Vh value, which is the ratio of the number of courses/the number of wells, was 1.9. The length of the knitting yarn appearing on the knit stitch side of the single circular knitted fabric was 95 $\mu$m.

Furthermore, as the front surface layer and the intermediate layer, the same materials as those used in Example 1 were used, and the single circular knitted fabric for the back surface layer was stuck to the resin film surface such that the sinker loop surface was adhered, to produce a three-layered laminate cloth (116 g/m$^2$) according to Example 6. The physical property values, the evaluation results, and the like measured for this three-layered laminate cloth are presented in Table 1 and Table 2.

[Example 7]

While the above-described Examples 1 to 6 are Examples according to three-layered laminate cloth, Example 7 is an Example according to a two-layered laminate cloth. With regard to the two-layered laminate cloth according to Example 7, a single circular knitted fabric for a back surface layer was produced by knitting the fabric with a 58-gauge circular knitting machine by using a nylon multifilament raw silk having a total fiber fineness of 22 decitex, 20 filaments, and a single fiber fineness of 1.1 decitex (22 dtex/20f) as the knitting yarn, and performing dyeing and finishing processing. The obtained single circular knitted fabric had a number of wells of 55 and a number of courses of 122, and the Vh value, which is the ratio of the number of courses/the number of wells, was 2.2. The length of the knitting yarn appearing on the knit stitch side of the single circular knitted fabric was 89 $\mu$m.

On the other hand, a hydrophilic non-porous resin film (thickness 14 $\mu$m) made of a polyurethane-based resin was prepared as a resin film. The single circular knitted fabric was stuck to one surface of this hydrophilic non-porous resin film such that the sinker loop surface side was adhered, and a two-layered laminate cloth (43 g/m$^2$) according to Example 7 was obtained. The physical property values, the evaluation results, and the like measured for this two-layered laminate cloth are presented in Table 1 and Table 2.

In order to make a comparison with the three-layered laminate cloths according to Examples 1 to 6 and the two-layered laminate cloth according to Example 7 as described above, first, three-layered laminate cloths of Comparative Examples 1 to 3 were produced, and the physical property values thereof and the like were evaluated.

(Comparative Example 1)

With regard to a three-layered laminate cloth of Comparative Example 1, a nylon multifilament raw silk having a total fiber fineness of 8 decitex, 5 filaments, and a single fiber fineness of 1.6 decitex (8 dtex/5f) was used as the knitting yarn for a single circular knitted fabric for a back surface layer. This knitting yarn is the same as the knitting yarn used for the single circular knitted fabric of Example 3. A single circular knitted fabric was produced by knitting this knitting yarn with a 58-gauge circular knitting machine and performing dyeing and finishing processing. The obtained single circular knitted fabric had a number of wells of 78 and a number of courses of 91, and the Vh value, which is the ratio of the number of courses/the number of wells, was 1.2. Thus, the single circular knitted fabric of Comparative Example 1 had a Vh value of less than 1.5 and did not satisfy the requirements of the invention. The length of the knitting yarn appearing on the knit stitch side of the single circular knitted fabric was 167 $\mu$m.

Furthermore, as the front surface layer and the intermediate layer, the same materials as those used in Example 3 were used, and the single circular knitted fabric for the back surface layer was stuck to the resin film surface such that the sinker loop surface was adhered, to produce a three-layered laminate cloth (105 g/m$^2$) according to Comparative Example 1. The physical property values, the evaluation results, and the like measured for this three-layered laminate cloth are presented in Table 1 and Table 2.

As shown in Table 2, the three-layered laminate cloth of Comparative Example 1 had a snag characteristic after a number of frictions of 500 times was grade 0.0, and since the through-hole was empty, measurement was impossible. That is, the friction resistance of the three-layered laminate cloth of Comparative Example 1 was not different from that of conventional three-layered laminate cloths, and when used in clothing articles and the like, the three-layered laminate cloth does not have physical properties that allow the laminate cloth to withstand usage for a longer period of time.

(Comparative Example 2)

A three-layered laminate cloth of Comparative Example 2 was produced by knitting a tricot knitted fabric having a double Denbigh texture as a knitted fabric for a back surface layer by using a nylon multifilament raw silk having a total fiber fineness of 8 decitex, 5 filaments, and a single fiber fineness of 1.6 decitex (8 dtex/5f) as the knitting yarn, and performing dyeing and finishing processing. The tricot knitted fabric had a number of wells of 32 and a number of courses of 69. Furthermore, as the front surface layer and the intermediate layer, the same materials as those of Example 3 were used, and a three-layered laminate cloth (108 g/m²) according to Comparative Example 2 was produced. The physical property values, the evaluation results, and the like measured for this three-layered laminate cloth are presented in Table 1 and Table 2.

This three-layered laminate cloth of Comparative Example 2 is the same as the moisture-permeable and waterproof cloth described in the above-mentioned Patent Document 1 from the viewpoint of using a tricot knitted fabric as the lining, and has the same problems as those of the moisture-permeable and waterproof cloth of Patent Document 1. That is, since the surface of the tricot knitted fabric has a recessed and projected structure, the hook side of a hook-and-loop fastener, a button, and the like get caught in this recessed and projected structure, and the surface is likely to be deteriorated due to wear. Specifically, as shown in Table 2, the three-layered laminate cloth of Comparative Example 3 had a snag characteristic after a number of frictions of 500 times was grade 0.0, and since the through-hole was empty, measurement was impossible. That is, the friction resistance of the three-layered laminate cloth of Comparative Example 3 was not different from that of conventional three-layered laminate cloths, and when used in clothing articles and the like, the three-layered laminate cloth does not have physical properties that allow the laminate cloth to withstand usage for a longer period of time.

The physical property values, evaluation results, and the like measured for the three-layered laminate cloths according to Examples 1 to 6, the two-layered laminate cloth according to Example 7, and the three-layered laminate cloths of Comparative Examples 1 and 2 described above are summarized in Table 1 and Table 2.

[Table 1]

| | Type of yarn | | | W (number of wells/inch) | C (number of courses/inch) | Vh value (C/W) |
|---|---|---|---|---|---|---|
| | Fiber fineness [T] (dtex) | Filament | Single fiber fineness | | | |
| Example 1 | 22 | 7 | 3.1 | 54 | 111 | 2.1 |
| Example 2 | 22 | 7 | 3.1 | 53 | 113 | 2.1 |
| Example 3 | 8 | 5 | 1.6 | 56 | 121 | 2.2 |
| Example 4 | 22 | 24 | 0.9 | 54 | 95 | 1.8 |
| Example 5 | 17 | 7 | 2.4 | 47 | 130 | 2.8 |
| Example 6 | 33 | 36 | 0.9 | 54 | 102 | 1.9 |
| Example 7 | 22 | 20 | 1.1 | 55 | 122 | 2.2 |
| Comparative Example 1 | 8 | 5 | 1.6 | 78 | 91 | 1.2 |
| Comparative Example 2 | 8 | 5 | 1.6 | 32 | 69 | - |

[Table 2]

| | Basis weight (g/m2) | Length of knit stitch warp knitting yarn (μm) | Snag measurement results (grade) | | Comprehensive evaluation |
|---|---|---|---|---|---|
| | | | 100 times | 500 times | |
| Example 1 | 23.5 | 90 | 5.0 | 5.0 | ○ |
| Example 2 | 23.5 | - | 5.0 | 5.0 | ○ |
| Example 3 | 8.7 | 122 | 5.0 | 5.0 | ○ |
| Example 4 | 22.4 | 129 | 5.0 | 4.5 | ○ |
| Example 5 | 20.6 | 58 | 5.0 | 5.0 | ○ |
| Example 6 | 38.3 | 95 | 5.0 | 5.0 | ○ |
| Example 7 | 25.8 | 89 | 5.0 | 5.0 | ○ |
| Comparative Example 1 | 9.8 | 167 | 4.5 | 0.0 | × |
| Comparative Example 2 | 12.4 | - | 3.0 | 0.0 | × |

As shown in Table 2, the three-layered laminate cloths according to Examples 1 to 6 and the two-layered laminate cloth according to Example 7 were such that the snag characteristics measurement results after a number of frictions of 100 times were all the highest grade 5.0, and the laminate cloths had extremely excellent friction durability. In contrast, the three-layered laminate cloths of Comparative Examples 1 and 2 were such that the snag characteristics after a number of frictions of 100 times were grade 4.5 or lower, and the measurement results after a number of frictions of 500 times were grade 2.0 or lower, implying that the three-layered laminate cloths were not suitable as fabrics for clothing articles that require durability. From these results, it was revealed that in order to obtain extremely excellent friction durability for two-layered and three-layered laminate cloths, the requirements of the invention are essential.

That is, as shown in Table 1, the two-layered and three-layered laminate cloths according to Examples 1 to 7 were all such that the Vh value representing the ratio between the number of courses C and the number of wells W exceeded 1.5, and the requirement of the invention that the Vh value is 1.5 or more is satisfied. As a result, extremely excellent snag characteristics are obtained as shown in Table 2. In contrast, the three-layered laminate cloths of Comparative Examples 1 and 2 all did not satisfy the requirement of having a Vh value of 1.5 or more.

In addition, as described above, the three-layered laminate cloth according to Example 2 is a product obtained by laminating a single circular knitted fabric produced in the same manner as in Example 1 by using the needle loop surface as a joining surface with the resin film of the intermediate layer. That is, the lining surface of the three-layered laminate cloth according to Example 2 is a sinker loop surface, and this sinker loop surface is exposed to hooking of a hook-and-loop fastener or the like. However, as shown in Table 2, the snag characteristics of Example 2 are grade 5.0 at the numbers of frictions of 100 times and 500 times, as is the case of Example 1. In this way, in the three-layered laminate cloth according to the present embodiment, even in a case where the surface exposed to friction is the sinker loop surface of a single circular knitted fabric, the durability against hooking and friction can be improved to a larger extent than in conventional cases.

[Comparison between Examples 1, 2, and 7 and lining formed from woven fabric through 3000 times of snagging]

Here, as an additional test, an attempt was made to conduct a comparison with a lining formed from a woven fabric, which is generally considered to be less susceptible to snagging than a knitted fabric. A woven fabric for a back surface layer was produced by weaving a plain weave fabric using a nylon multifilament false-twisted yarn having a total fiber fineness of 17 decitex for both the warp and the weft, 5 filaments, and a single fiber fineness of 3.4 decitex (17 dtex/5f), and performing dyeing and finishing processing. The plain weave fabric had a number of wells of 143 and a number of courses of 102. Furthermore, as the front surface layer and the intermediate layer, materials similar to those used in Example 1 were used, and a three-layered laminate cloth (97 g/m2) was produced.

While taking the three-layered laminate cloth that used this woven fabric as the lining as Comparative Example 3, in order to evaluate the friction durability in comparison with this Comparative Example 3, the snag characteristics with a number of frictions of 3000 times were measured for the three-layered laminate cloths according to Examples 1 and 2 and the two-layered laminate cloth according to Example 7. As a result, as shown in Table 3, in Example 1 and Example 7, an evaluation of grade 5.0 was obtained, which was the same as in the case where a woven fabric was used as the lining.

[Table 3]

| | Type of yarn | | | Joining surface with resin film | Measurement results for 3000 times of snagging (grade) |
|---|---|---|---|---|---|
| | Fiber fineness [T] | Filament | Single fiber fineness | | |
| Example 1 | 22 | 7 | 3.1 | Sinker loop surface | 5.0 |
| Example 2 | Same as above | Same as above | Same as above | Needle loop surface | 0.0 |
| Example 7 | 22 | 20 | 1.1 | Sinker loop surface | 5.0 |
| Comparative Example 3 | (-) | (-) | (-) | (No difference in joining surface) | 5.0 |

In contrast, with regard to the three-layered laminate cloth of Comparative Example 3, although the measurement results for the snag characteristics were all grade 5.0 for 100 times, 500 times, and 3000 times, a woven fabric was used as the lining. For this reason, the feel of touch was inferior as compared with the three-layered laminate cloths according to Examples 1 to 6 of the invention using a single circular knitted fabric as the lining. As a result, it was revealed that the object of the invention to "provide a laminate cloth having durability that can sufficiently cope even with use applications which require higher friction durability, such as uniforms and combat uniforms, while maintaining an excellent feel of touch and lightness, by using a single circular knitted fabric" has been achieved.

As described above, in the invention, a laminate cloth having dramatically improved durability against hooking and wear can be obtained by making the single circular knitted fabric used for the two-layered and three-layered laminate cloths to have a special knitted structure.

To express the invention differently from another perspective, the single circular knitted fabric according to the invention is a single circular knitted fabric with a jersey knit texture, which is used for a laminate cloth including a layer formed of fibers, and has a feature that the Vh value (C/W) representing the ratio between the density in the warp direction (number of courses C) of the jersey knit texture and the density in the weft direction (number of wells W) of the jersey knit texture is within the range of 1.5 or more and 3.0 or less.

With regard to the single circular knitted fabric according to the invention, it is preferable that the number of courses C is 90 courses or more per inch.

It is preferable that the knitting yarn constituting the single circular knitted fabric is a filament raw silk (straight yarn).

It is preferable that the fiber fineness of the knitting yarn of the single circular knitted fabric is 36 decitex or less.

With regard to the single circular knitted fabric according to the invention, it is preferable that the number of courses C is 100 courses or more per inch.

Furthermore, with regard to the single circular knitted fabric according to the invention, it is preferable that the number of courses C is 110 courses or more per inch.

In addition, the laminate cloth according to the invention is a laminate cloth formed using any one of the above-described single circular knitted fabrics, and includes at least the single circular knitted fabric and a base layer formed from either one or both of a resin film and a nonwoven fabric.

With regard to the laminate cloth according to the invention, it is preferable that at least one kind of fabric selected from a woven fabric, a knitted fabric, and a nonwoven fabric is laminated on the opposite side of the single circular knitted fabric with respect to the base layer.

It is preferable that the laminate cloth according to the invention is laminated by using the sinker loop surface of the jersey knit texture of the single knitted fabric as a joining surface with the base layer.

In addition, with regard to a laminate cloth laminated by using the sinker loop surface of the jersey knit texture of the single knitted fabric as a joining surface with the base layer, it is preferable that the length in the warp direction of the knitting yarn appearing on the knit stitch (needle loop surface) side of the jersey knit texture of the single knitted fabric is 150 μm or less.

INDUSTRIAL APPLICABILITY

Since the laminate cloth according to the invention has extremely excellent wear resistance as compared with the two-layered and three-layered laminate cloths based on conventional technologies, also has a favorable feel of touch on the front surface and the back surface, and is also comfortable to wear, the laminate cloth can be used for various clothing applications such as rain gear, sportswear, workwear, outdoor wear, leisure wear, uniforms, and combat uniforms.

Furthermore, the laminate cloth can be suitably used even in the fields of tents, bags, sleeping bags, and the like in addition to clothing applications.

EXPLANATIONS OF LETTERS OR NUMERALS

10 TWO-LAYERED LAMINATE CLOTH
12 BASE LAYER
14 SINGLE CIRCULAR KNITTED FABRIC LAYER
20 THREE-LAYERED LAMINATE CLOTH
21 FRONT SURFACE LAYER
22 INTERMEDIATE LAYER
24 BACK SURFACE LAYER
31, 101 KNITTING YARN
32, 102 KNITTED STITCH
34, 100 SINGLE CIRCULAR KNITTED FABRIC
103 GAP
H WEFT DIRECTION (WIDTH DIRECTION)
L LENGTH OF KNITTING YARN APPEARING IN WARP DIRECTION
M LENGTH OF KNITTING YARN APPEARING ON SINKER LOOP SURFACE
N WARP DIRECTION (LENGTH DIRECTION)

**Claims**

1.  A laminate cloth comprising at least:

    a base layer formed from either one or both of a resin film and a nonwoven fabric; and
    a single circular knitted fabric layer with a jersey knit texture,
    wherein a Vh value (C/W) representing a ratio between a density in a warp direction (number of courses C) of the jersey knit texture and a density in a weft direction (number of wells W) of the jersey knit texture is within the range of 1.5 or more and 3.0 or less.

2.  The laminate cloth according to claim 1, wherein at least one kind of fabric selected from a woven fabric, a knitted fabric, and a nonwoven fabric is laminated on the opposite side of the single circular knitted fabric with respect to the base layer.

3.  The laminate cloth according to claim 1, wherein the number of courses C is 90 courses or more per inch.

4.  The laminate cloth according to claim 1, wherein a knitting yarn constituting the single circular knitted fabric is a filament raw silk (straight yarn).

5.  The laminate cloth according to claim 1, wherein the knitting yarn of the single circular knitted fabric has a fiber fineness of 36 decitex or less.

6.  The laminate cloth according to claim 1, wherein the number of courses C is 100 courses or more per inch.

7.  The laminate cloth according to claim 1, wherein the number of courses C is 110 courses or more per inch.

8.  The laminate cloth according to claim 1, wherein a sinker loop surface of the single circular knitted fabric is laminated as a joining surface with the base layer.

**9.** The laminate cloth according to claim 8, wherein a length in a warp direction of the knitting yarn appearing on a knit stitch (needle loop surface) side of the jersey knit texture is 150 $\mu$m or less.

**10.** A single circular knitted fabric for use in the laminate cloth according to any one of claims 1 to 9.

**Amended claims under Art. 19.1 PCT**

**1.** A laminate cloth comprising at least:

a base layer formed from either one or both of a resin film and a nonwoven fabric; and
a single circular knitted fabric layer with a jersey knit texture,
wherein a Vh value (C/W) representing a ratio between a density in a warp direction (number of courses C) of the jersey knit texture and a density in a weft direction (number of wells W) of the jersey knit texture is within the range of 1.5 or more and 3.0 or less,
a knitting yarn of the single circular knitted fabric has a fiber fineness of 36 decitex or less, and
the number of wells W is within the range of 37 wells/inch or more and 70 wells/inch or less.

**2.** The laminate cloth according to claim 1, wherein the single circular knitted fabric has a basis weight within the range of 39 g/m$^2$ or less.

**3.** The laminate cloth according to claim 1, wherein at least one kind of fabric selected from a woven fabric, a knitted fabric, and a nonwoven fabric is laminated on the opposite side of the single circular knitted fabric with respect to the base layer.

**4.** The laminate cloth according to claim 1, wherein the number of courses C is 90 courses or more per inch.

**5.** The laminate cloth according to claim 1, wherein the knitting yarn constituting the single circular knitted fabric is a filament raw silk (straight yarn).

**6.** The laminate cloth according to claim 1, wherein the number of courses C is 100 courses or more per inch.

**7.** The laminate cloth according to claim 1, wherein the number of courses C is 110 courses or more per inch.

**8.** The laminate cloth according to claim 1, wherein a sinker loop surface of the single circular knitted fabric is laminated as a joining surface with the base layer.

**9.** The laminate cloth according to claim 8, wherein a length in a warp direction of the knitting yarn appearing on a knit stitch (needle loop surface) side of the jersey knit texture is 150 $\mu$m or less.

**10.** A single circular knitted fabric for use in the laminate cloth according to any one of claims 1 to 9.

**Amended claims under Art. 19.1 PCT**

**1.** made it clear that with regard to a single circular knitted fabric constituting a laminate cloth, the fiber fineness of the knitting yarn of a single circular knitted fabric layer is 36 decitex or less, and the density in the weft direction (number of wells W) is within the range of 37 wells/inch or more and 70 wells/inch or less, and therefore, the single circular knitted fabric is further lightweight.
The Cited Reference relates to a heavy knitted fabric to be used for seat covers and the like of automobiles, and is exactly opposite to the single circular knitted fabric for clothing articles that are definitely assumed to be lightweight, so that the technical fields are completely different.
The laminate cloth of the invention uses a lightweight single circular knitted fabric and also has extremely excellent friction durability against snags, and therefore, an effect of combining high strength, durability, and lightness that is essential for clothing articles, is obtained.

2. made it clear that the single circular knitted fabric has a basis weight within the range of 39 g/m$^2$ or less, the single circular knitted fabric is further lightweight, and therefore, the basis weight of the laminate cloth as a whole also becomes small, so that a further lightweight laminate cloth is obtained.

FIG 1

( a )

10

14

I

12

I

( b )

10

14

12

FIG 2

( a )

20

21

II

22

II

24

( b )

20

21

22

24

FIG 3

FIG 4

FIG 5

FIG 6

FIG 7

EP 4 417 412 A1

# INTERNATIONAL SEARCH REPORT

| | International application No. |
|---|---|
| | **PCT/JP2022/037972** |

**A. CLASSIFICATION OF SUBJECT MATTER**

***B32B 5/26***(2006.01)i; ***B32B 27/12***(2006.01)i; ***D04B 1/00***(2006.01)i; ***D06M 17/00***(2006.01)i
FI: B32B5/26; B32B27/12; D04B1/00 A; D06M17/00 H; D06M17/00 M

According to International Patent Classification (IPC) or to both national classification and IPC

**B. FIELDS SEARCHED**

Minimum documentation searched (classification system followed by classification symbols)

B32B5/26; B32B27/12; D04B1/00; D06M17/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2012-161924 A (MITSUKAWA & CO., LTD.) 30 August 2012 (2012-08-30)<br>claim 1, paragraphs [0010], [0041], [0044]-[0045], [0056], examples 1-4, fig. 1-4 | 1-3, 5-10 |
| Y | WO 2012/090685 A1 (MITSUKAWA & CO., LTD.) 05 July 2012 (2012-07-05)<br>paragraph [0013], claim 1, fig. 1-2, 4 | 1-2, 4-5, 8-10 |
| Y | JP 2-118142 A (GENERAL MOTORS CORPORATION) 02 May 1990 (1990-05-02)<br>p. 2, upper right column, lines 15-18, p. 2, lower left column, lines 10-14, examples | 1-10 |
| A | WO 2019/102770 A1 (TEIJIN FRONTIER CO., LTD.) 31 May 2019 (2019-05-31) | 1-10 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 December 2022** | **20 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT

Information on patent family members

International application No.

**PCT/JP2022/037972**

| Patent document cited in search report | | | Publication date (day/month/year) | Patent family member(s) | | | Publication date (day/month/year) |
|---|---|---|---|---|---|---|---|
| JP | 2012-161924 | A | 30 August 2012 | (Family: none) | | | |
| WO | 2012/090685 | A1 | 05 July 2012 | (Family: none) | | | |
| JP | 2-118142 | A | 02 May 1990 | US | 5027618 | A | |
| | | | | column 1, lines 35-38, column 1, lines 50-55, examples | | | |
| | | | | EP | 361856 | A2 | |
| | | | | DE | 68925021 | T2 | |
| WO | 2019/102770 | A1 | 31 May 2019 | US | 2020/0324531 | A1 | |
| | | | | EP | 3715113 | A1 | |
| | | | | CN | 111372775 | A | |
| | | | | KR | 10-2020-0088421 | A | |
| | | | | TW | 201932291 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55007483 A
- JP 4805408 B
- JP 5602040 B